# EUROPÄISCHE PATENTANMELDUNG

(11) **EP 1 492 066 A1**
(43) Veröffentlichungstag der Anmeldung: **29.12.2004**
(21) Anmeldenummer: 03014350.7
(22) Anmeldetag: 26.06.2003
(51) Int. Cl.: G07F 19/00, H04M 15/00, H04Q 7/38

(54) **Verfahren zur alternativen Vergebührung von abgehenden Rufen im Roaming Fall**

(71) Anmelder: Siemens Schweiz AG, 8047 Zürich (CH)
(72) Erfinder: Hasler, Rudolf, 8047 Zürich (CH)
(74) Vertreter: Fischer, Michael, Dr.

(57) **Zusammenfassung**

Um ein Kundenbedürfnis nach einer Fakturierung pro Mobilnetzbetreiber zu erfüllen, wird ein Verfahren vorgeschlagen, das folgende Schritte umfasst:
- A: beim Einbuchen der Teilnehmerstation (5) in ein vom Heimatnetz (1) verschiedenes Mobilfunknetz (2) erhält die Teilnehmerstation (5) vom Mobilfunknetz (2) eine erste Meldung;
- B: aufgrund der vom Teilnehmerstation (5) empfangenen Meldung wird von der Teilnehmerstation (5) eine weitere Meldung an das Mobilfunknetz (2) gesandt mit dem Inhalt, dass in der Teilnehmerstation (5) eine vorgängig gespeicherte Finanztransaktionsidentität verfügbar ist;
- C: aufgrund des Empfangs der weiteren Meldung erfolgt eine Übertragung der in der Teilnehmerstation (5) gespeicherten Finanztransaktionsidentität an das Mobilfunknetz (2);
- D: aufgrund einer als gültig erkannten empfangenen Finanztransaktionsidentität erfolgt die Gebührenverrechnung als Finanztransaktion durch den Betreiber des Mobilfunknetzes (2).
Der Verfahrensschritt D kann abhängig gemacht werden von einer expliziten Erlaubnis durch den Heimat-Netzbetreiber.

## Beschreibung

Die vorliegende Erfindung betrifft ein Verfahren zur Gebührenverrechnung pro Netzbetreiber in einem Mobilfunknetz nach dem Oberbegriff des Patentanspruchs 1.

Dank dem sogenannten Roaming zwischen verschiedenen GSM-Mobilfunkbetreibern wie z.B. Swisscom Mobile und Itineris (France Télécom) ist ein Teilnehmer mit seinem Mobiltelephon - unabhängig davon in welchem Netz sein Gerät eingebucht ist - unter seiner "mobilen" Telephonnummer erreichbar. Für die Gebührenverrechnung werden die anfallenden Tax-Records vom sogenannten Visitor-Netzbetreiber dem Heimat-Netzbetreiber übermittelt. Durch eine Datennachverarbeitung (Postprocessing) wird einerseits eine Gebührenverrechnung vom Heimat-Netzbetreiber an den Teilnehmer vorgenommen. Ebenfalls mittels einer Datennachverarbeitung erfolgt die Verrechnung der Gebührenanteile zwischen Heimat-Netzbetreiber und Visitor-Netzbetreiber. Der Vorteil dieses bekannten Verfahrens liegt darin, dass der Teilnehmer unabhängig von der Nutzung von Diensten verschiedener Visitor-Netzbetreiber eine einzige Rechnung erhält.

Der gleichen Komfort soll auch einem Teilnehmer mit einem sogenannten Prepaid-Abonnement zukommen. Dazu wird in WO 00/02374 A1 ein Verfahren offenbart, das einen momentanen Guthabenstand vom Heimatregister HLR zum Visitorregister VLR transferiert, so dass seitens der beiden involvierten Netzbetreiber sichergestellt werden kann, dass Dienste nur bis zur Ausschöpfung des betreffenden Guthabenstandes bezogen werden können.

Die hohe Wettbewerbsintensität mehrerer Netzbetreiber über der gleichen geographischen Region macht es den Teilnehmern schwierig, einen Ueberblick über die pro Netzbetreiber angewendeten Tarife zu erhalten. Um dieses Problem zu lösen, wird in WO 99/16267 A1 vorgeschlagen, dass vom Heimat-Netzbetreiber die Tarife der involvierten Visitornetzbetreiber angefordert werden können und der Heimat-Netzbetreiber mit dem Dienst SMS auf den jeweilig günstigsten oder günstigeren Visitornetzbetreiber aufmerksam macht.

Bedingt durch die zunehmende Mobilität einerseits und die nomadenhafte Lebensweise in der heutigen zeit ist das Teilnehmerbedürfnis entstanden, nicht nur den jeweilig preiswertesten Visitor-Netzbetreiber auswählen zu können. Darüber hinaus soll für die Beanspruchung von Diensten in einem sogenannten Visitornetz direkt vom entsprechenden Visitor-Netzbetreiber eine Rechnung oder eine Belastung auf ein vom Teilnehmer anzugebendes Konto angefordert werden können.

Der vorliegenden Erfindung liegt daher die Aufgabe zugrunde, Verfahren anzugeben, das auf einfache Art und Weise ermöglicht, für die Beanspruchung von Diensten in einem sogenannten Visitor-Netz direkt vom entsprechenden Visitor-Netzbetreiber eine Rechnung oder eine Belastung auf ein vom Teilnehmer anzugebendes Konto angefordert werden kann.

Diese Aufgabe wird erfindungsgemäss durch das im Patentanspruch 1 angegebene Verfahren gelöst.

Durch die erfindungsgemässen Verfahrensschritte, wonach
- A: beim Einbuchen der Teilnehmerstation in ein vom Heimatnetz verschiedenes Mobilfunknetz erhält die Teilnehmerstation vom Mobilfunknetz eine erste Meldung;
- B: aufgrund der vom Teilnehmerstation empfangenen Meldung wird von der Teilnehmerstation eine weitere Meldung an das Mobilfunknetz gesandt mit dem Inhalt, dass in der Teilnehmerstation eine Finanztraktionsidentität gespeichert ist;
- C: aufgrund des Empfangs der weiteren Meldung erfolgt eine Übertragung der in der Teilnehmerstation gespeicherten Finanztransaktionsidentität an das Mobilfunknetz;
- D: aufgrund einer als gültig erkannten empfangenen Finanztransaktionsidentität erfolgt die Gebührenverrechnung durch den Betreiber des Mobilfunknetzes;
ist ein Verfahren zur betreiberspezifischen Fakturierung von Diensten geschaffen, das einfach implementierbar und durch einen Teilnehmer einfach benutzbar ist und eine hohe Sicherheit gegen Missbräuche aufweist. Das Verfahren ermöglicht, dass der Teilnehmer Rufe absetzen kann und diese ihm direkt ohne Mitwirkung des Heimat-Netzbetreibers verrechnet werden.

Vorteilhafte Ausführungsformen der vorliegenden Erfindungen sind in den abhängigen Ansprüchen angegeben.

Ein Ausführungsbeispiel der Erfindung wird nachfolgend anhand der Zeichnung näher erläutert. Dabei zeigen:

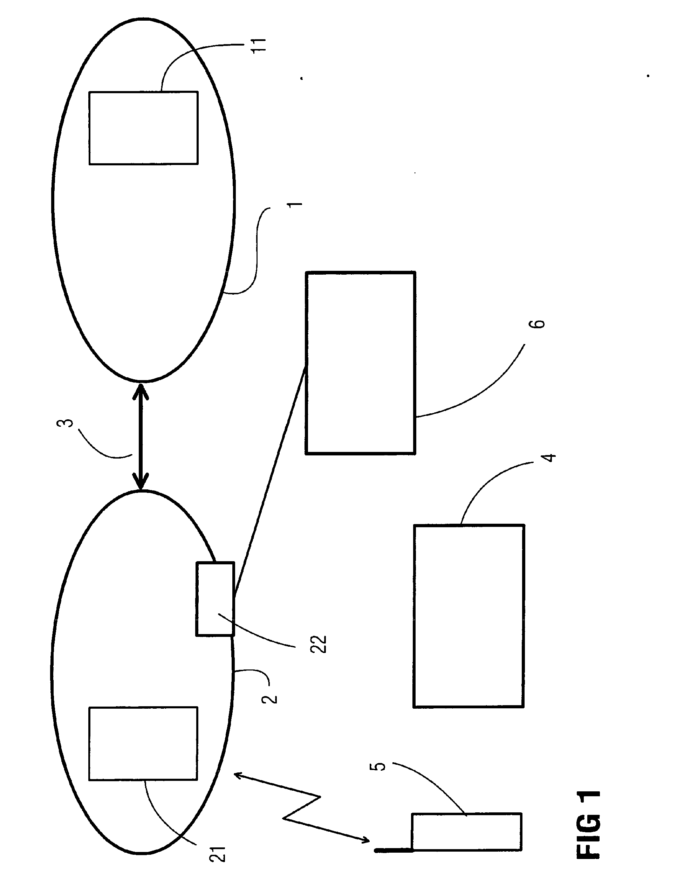

- Figur 1: Netzstruktur zur Durchführung des erfindungsgemässen Verfahrens;

Das Ausführungsbeispiel stützt sich auf ein GSM-Mobilfunknetz, auf das Verfahren ZOOP der Firma Harex Infotech [1] und auf die Spezifikation IrFM "Infrared Financial Messaging" [2].

Figur 1 zeigt die Netzstruktur zur Durchführung des erfindungsgemässen Verfahrens, in dem rechts mit den Bezugszeichen 1 ein Heimatnetz und mit 11 die zugehörige Heimatdatei bezeichnet ist. Letztere wird üblicherweise mit HLR bezeichnet. Diesem Heimatnetz 1 ist eine mobile Teilnehmerstation zugeordnet. Die mobile Teilnehmerstation 5 selber umfasst ein mobiles Endgerät ME und ein Teilnehmeridentifikationsmodul SIM.

Gemäss der Figur 1 wird ein weiteres Mobilfunknetz 2 mit einer zugehörigen Aufenthalts-Datei 21 angenommen, wobei dessen Betreiber mit dem Betreiber des vorgenannten Heimatnetzes 1 ein Roaming-Abkommen geschlossen hat. Dieses Abkommen und dessen Implementierung erlaubt, dass sich die Teilnehmerstation 5 in diesem Mobilfunknetz 2 einbuchen kann und dadurch Dienste aus dem Mobilfunknetz 2 nutzbar sind. Die beiden Mobilfunknetze 1 und 2 sind über eine SS#7/MAP-Strecke auf eine bekannte Weise miteinander verbunden.

Zur Erläuterung des erfindungsgemässen Verfahrens wird ferner angenommen, dass in der mobilen Teilnehmerstation 5 vorgängig eine Finanztransaktionsidentität gespeichert ist. Diese Speicherung erfolgt in diesem Ausführungsbeispiel mit dem Verfahren ZOOP unter Einbezug des ZOOP Centers 4. Die Übertragung dieser Finanztransaktionsidentität auf die mobile Teilnehmerstation kann drahtgebunden oder drahtlos, z.B. über OTA (over the air), mit IrDA, Bluetooth oder über das Internet erfolgen. Die Speicherung erfolgt dabei vorzugsweise im Identifikationsmodul SIM.

Nach diesen aufgestellten Voraussetzungen ist in einer bevorzugten Ausführungsform der Ablauf des erfindungsgemässen Verfahrens wie folgt:

### Verfahrensschritt A

Die Teilnehmerstation 5 bucht sich auf die bekannte Weise in ein vom seinem Heimatnetz 1 verschiedenes Mobilfunknetz 2 ein. Daraufhin erhält die Teilnehmerstation 5 vom Mobilfunknetz 2 eine erste Meldung, vorzugsweise mit dem Dienst SMS; dies ist allgemein bekannt unter dem Begriff "Begrüssungs-SMS".

### Verfahrensschritt B

aufgrund der vom Teilnehmerstation 5 empfangenen Meldung kann ein Teilnehmer von seiner Teilnehmerstation 5 eine weitere Meldung an das Mobilfunknetz 2 senden, vorzugsweise an den Absender der vorgenannten Begrüssungs-SMS. Der Teilnehmer muss diese weitere Meldung mit dem Inhalt versehen, wonach in seiner Teilnehmerstation 5 eine Finanztraktionsidentität gespeichert ist. Dazu kann das erste Wort - Wort im Sinne einer Zeichenkette - z.B. lauten:

### LOCALINVOICE oder LOCAL oder ähnlich.

Möglich ist, dass die vom Netzbetreiber gesandte Begrüssungs-SMS einen Text enthält, der im Falle eines Wunsches zur lokal Fakturierung an erster Stelle gerade eines der vorgenannten Wörter enthält, so dass vom Teilnehmer die erhaltene Begrüssungs-SMS nur zurückgesandt werden musss. Beispiel solcher Begrüssungs-SMS:
- "LOCALINVOICE allowed by Itineris, please just return this Message".
- "Local charging possible, just return this message, your operator X-Press_Phone"

### Verfahrensschritt C

Durch den Empfang der weiteren Meldung wird vom Mobilfunknetz 2 eine Übertragung der in der Teilnehmerstation 5 gespeicherten Finanztransaktionsidentität eingeleitet. Dieser Transfer der Finanztransaktionsidentität kann leitungsvermittelt oder paketvermittelt, z.B. mit dem Dienst GPRS erfolgen. Die konkrete Implementierung kann im Rahmen des Verfahrens ZOOP gemäss dem von der IrDA spezifizierten Profile IrFM erfolgen, Dieses Profil ist in der Schrift [2] offenbart. Zwar ist das Profil IrFM zunächst für einen physisch nahen Point of Sale und dem Trägerdienst Infrarot IrDA vorgesehen. Dieses Profil ist jedoch nicht auf einen bestimmten Trägerdienst beschränkt. In der Figur 1 ist mit dem Bezugszeichen 22 der sogenannte Verkaufspunkt "Point of Sale" bezeichnet, der zwar real vorhanden ist, aber aus Sicht des Verfahrens ZOOP abgesetzt ist, d.h. eine mobile Station 5 kommt nie in die unmittelbar distanzmässige Nähe des Points of Sale 22. Für das Verfahren ZOOP ist diese mangelnde Nähe jedoch unwesentlich.

### Verfahrensschritt D

Nach erfolgter Übertragung und aufgrund einer als gültig erkannten empfangenen Finanztransaktionsidentität ist in der Aufenthaltsdatei die Information hinterlegt, dass die benutzten und zu vergebührenden Dienste durch eine lokale Gebührenverrechnung zu fakturieren sind. Die Aufenthaltsdatei 21 wird beim Einbuchen als "Kopie" der Heimatdatei 11 bzw. HLR beim Einbuchen in ein Mobilfunknetzes 2 angelegt. In dieser Aufenthaltsdatei 21 bzw. VLR ist auch die Information enthalten, dass der Heimat-Netzbetreiber eine lokale Fakturierung erlaubt. Die Aufenthaltsdatei 21 bzw. VLR erhält über die Standardprozeduren die für die Kommunikation notwendigen Parameter aus der Heimatdatei 11.

Das Verfahren ermöglicht es nun, dass der Teilnehmer Rufe absetzen kann und diese ihm direkt ohne Mitwirkung des Heimat-Netzbetreibers verrechnet werden. Dies ist eine wesentliche Voraussetzung für die Konsistenz der ausgehandelten Roaming-Verträge. Rein technisch gesehen wäre es auch möglich, dass diese Erlaubnis bzw. Berechtigung zur lokalen Fakturierung vom jeweiligen Mobilfunkbetreiber selber erteilt wird. Die Fakturierung selber erfolgt auf bekannte Art zwischen Verkaufspunkt 22 und der Finanztransaktionsstelle 6.

Die vorgenannte Erfindung ist nicht auf das System GSM beschränkt, sondern kann überall dort angewendet werden, wo mehrere Netzbetreiber über Roaming-Verträge zur Gewährung von Diensten unabhängig vom Heimatnetz gebunden sind; möglich ist auch eine Fakturierung pro Netzbetreiber in einem Festnetz oder in einem Land bzw. geographischen Region, wo mehrere Mobilnetzbetreiber miteinander in einem Wettbewerbsverhältnis stehen. Bei der Anwendung des Verfahrens in einem Festnetz identifiziert sich der Teilnehmer durch den sogenannten Zugangscode, die Begrüssungs-SMS kann z.B. als UUS1-Meldung ausgestaltet sein. Anstelle eines mobiler Station kann ein ISDN-Komforttelefon vorgesehen werden.

### Liste der verwendeten Bezugszeichen

- 1: Heimatnetz
- 2: Visitor-Netz
- 3: SS#7/MAP - Strecke
- 4: ZOOP-Center
- 5: Teilnehmerstation MS
- 6: Finanztransaktionsstelle
- 11: Heimatdatei HLR
- 21: Aufenthaltsdatei VLR
- 22: Verkaufspunkt, Point of Sale PoS

### Liste der verwendeten Abkürzungen

- GSM: Global System for Mobile Communication
- GPRS: General Packet Radio Service
- HLR: Heimatdatei, Home Location Register
- ISDN: Integrated Service Digital Network
- MAP: Mobile Application Part
- ME: Mobile Equipement
- MS: Mobile Station
- PoS: Point of Sale
- SIM: Subscriber Identity Module
- SS#7: Signalisierungssystem Nr.7
- UUS: User User Signalling
- VLR: Aufenthaltsdatei, Visitor Location Register

### Liste der zitierten Dokumente

- WO 99/16267 A1: Network based tariff acquisition system for roaming mobile subscribers;
Telefonaktiebolaget LM Ericsson, Stockholm.
- WO 00/02374 A1: Call prepayment in a telecommunication system;
Telefonaktiebolaget LM Ericsson, Stockholm.
- [1]: Quelle vom 20. Juni 2003:
http://www.mzoop.com/en/zoop/
- [2]: Infrared Data Association (IrDA®) Infrared Financial Messaging (IrFM™) Point and Pay Profile; Version 1.0 December 9, 2002.

## Patentansprüche

1. Verfahren zur Gebührenverrechnung für eine mobile Teilnehmerstation (5) in einem Mobilfunknetz (2), wobei die Teilnehmerstation (5) einem Heimatnetz (1) zugeordnet ist und in der Teilnehmerstation (5) eine Finanztransaktionsidentität gespeichert ist;
**gekennzeichnet durch** die Verfahrensschritte
A beim Einbuchen der Teilnehmerstation (5) in ein vom Heimatnetz (1) verschiedenes Mobilfunknetz (2) erhält die Teilnehmerstation (5) vom Mobilfunknetz (2) eine erste Meldung;
B aufgrund der vom Teilnehmerstation (5) empfangenen Meldung wird von der Teilnehmerstation (5) eine weitere Meldung an das Mobilfunknetz (2) gesandt mit dem Inhalt, dass in der Teilnehmerstation (5) eine Finanztraktionsidentität gespeichert ist;
C aufgrund des Empfangs der weiteren Meldung erfolgt eine Übertragung der in der Teilnehmerstation (5) gespeicherten Finanztransaktionsidentität an das Mobilfunknetz (2);
D aufgrund einer als gültig erkannten empfangenen Finanztransaktionsidentität erfolgt die Gebührenverrechnung **durch** den Betreiber des Mobilfunknetzes (2).

2. Verfahren nach Anspruch 1,
**dadurch gekennzeichnet, dass**
im Verfahrensschritt B die Übermittlung der weiteren Meldung durch eine Teilnehmerinteraktion initiiert wird.

3. Verfahren nach Anspruch 1 oder 2,
**dadurch gekennzeichnet, dass**
die vorgängige Speicherung der Finanztransaktionsidentität nach dem Verfahren ZOOP erfolgt.

4. Verfahren nach einem der Ansprüche 1 bis 3,
**dadurch gekennzeichnet, dass**
im Verfahrensschritt C die Finanztransaktionsidentität über einen leitungs- oder paketvermittelten Trägerdienst (GPRS) erfolgt.

5. Verfahren nach Anspruch 4,
**dadurch gekennzeichnet, dass**
im Verfahrensschritt C die Finanztransaktionsidentität gemäss dem Profil IrFM spezifiziert ist.

6. Verfahren nach einem der Ansprüche 1 bis 5,
**dadurch gekennzeichnet, dass**
der Verfahrensschritt C nur dann ausgeführt wird, wenn eine Berechtigung im Aufenthaltsregister (VLR, 21) des Mobilfunknetzbetreibers vorhanden ist.

7. Verfahren nach Anspruch 6,
**dadurch gekennzeichnet, dass**
die Berechtigung in der Heimatdatei (HLR, 11) vorgebbar ist und dass beim Einbuchen in ein vom Heimatnetz verschiedenes Mobilfunknetz dieses Berechtigung mit die Aufenthaltsdatei (VLR, 21) transferiert wird.
